# EUROPEAN PATENT APPLICATION

(11) **EP 0 532 004 A2**
(43) Date of publication of application: **17.03.1993**
(21) Application number: 92115513.1
(22) Date of filing: 10.09.1992
(51) Int. Cl.: G11B 20/10, G11B 7/26, G11B 7/28, G11B 20/12

(54) **Method for manufacturing ROM type optical disk**

(30) Priority: 10.09.1991 JP 230442/91
(71) Applicant: SUMITOMO CHEMICAL COMPANY, LIMITED, Osaka (JP); DAICEL CHEMICAL INDUSTRIES CO., LTD., Sakai-shi Osaka 590 (JP); SUMITOMO METAL MINING COMPANY LIMITED, Tokyo 105 (JP)
(72) Inventor: Furukawa, Yasuhito, Himeji-shi (JP); Deguchi, Toshihisa, Himeji-shi (JP); Kami, Kenichiro, Himeji-shi (JP)
(74) Representative: Henkel, Feiler, Hänzel & Partner

(57) **Abstract**

According to the present invention, there is provided a method for manufacturing a ROM type optical disk in which application program data are written, wherein application program data ([2], [3]) having no information on positions for writing data stored in a storage device (1) are written in an optical disk (3) for supplying data by a data writing optical disk drive (2), and then, the application program data ([2], [3]) and information ([1]) on positions for writing data are read out of an optical disk (3) for supplying data by a data reading optical disk drive (4) and stored in a storage device (5) for manufacturing a ROM type optical disk.

## Description

### BACKGROUND OF THE INVENTION

The present invention relates to a method for manufacturing a ROM type optical disk, and more particularly to a method for obtaining application program data for writing in a ROM type optical disk added with information on data writing positions showing track and sector arrangement and the like in the manufacture of the ROM type optical disk.

There are those types of optical disks called ROM and Partial-ROM (P-ROM). These are of such a type that application program data are recorded in the whole (ROM) or a part of (P-ROM) optical disk in advance, and a general user can execute and make access to the application program data recorded on an optical disk without writing the application program data in the optical disk by oneself.

As the features of this ROM type optical disk, such points may be mentioned that a sheet of stamper for forming in which application program data are written is manufactured and several thousand sheets of ROM type optical disks are manufactured by resin molding using this stamper, thereby enabling to supply ROM type optical disks in which application program data are written to a plurality of users at a low price.

### SUMMARY OF THE INVENTION

Here, in order to manufacture a stamper for forming in which application program data are written while accommodating quickly, a supply configuration of data becomes a primary factor when the application program data are supplied. As of now, however, the ROM type optical disk is not on the market, and definite techniques related to the supply configuration have neither been established at present.

It is an object of the present invention to convert application program data having no information on positions for writing supplied data into application program data having information on positions for writing data easily and promptly.

Namely, according to the present invention, there is provided a method for manufacturing a ROM type optical disk with application program data written therein, wherein application program data having no information on positions for writing data stored in a storage device are written in an optical disk for supplying data by a data writing optical disk drive, and then application program data and information on positions for writing data are read out of the optical disk for supplying data by a data reading optical disk drive and stored in a storage device for manufacturing a ROM type optical disk.

The application program data having no information on positions for writing the data stored in the storage device for supplying an application program are written in an optical disk for supplying data using an optical disk drive for writing data so as to show a layout (track and sector arrangement) same as that of a ROM type optical disk to be manufactured.

Next, the optical disk for supplying data in which this application program data are written is read by means of an optical disk drive for reading the data so as to store information on positions for writing the data showing application program data, track and sector arrangement and the like in the storage device for manufacturing a ROM type optical disk.

The application program having writing information stored in the storage unit for manufacturing a ROM type optical disk is modulated and recorded on a glass original plate applied with photoresist by means of a formatter and a cutting machine in accordance with an established rule, a stamper is produced, resin molding is performed with this stamper and a recording layer and/or a reflective layer and the like are coated thereon, thus manufacturing a ROM type optical disk.

Besides, the storage device may be any of these that can execute input/output of data such as a hard disk, an optical disk and a tape streamer. Further, a write-once type or erasable type optical disk is used for the disk for supplying the data. Since rewriting of the data in the optical disk is possible when an erasable type optical disk is used, it is possible to use the same optical disk any number of times for supplying the application program data.

### BRIEF DESCRIPTION OF THE DRAWING

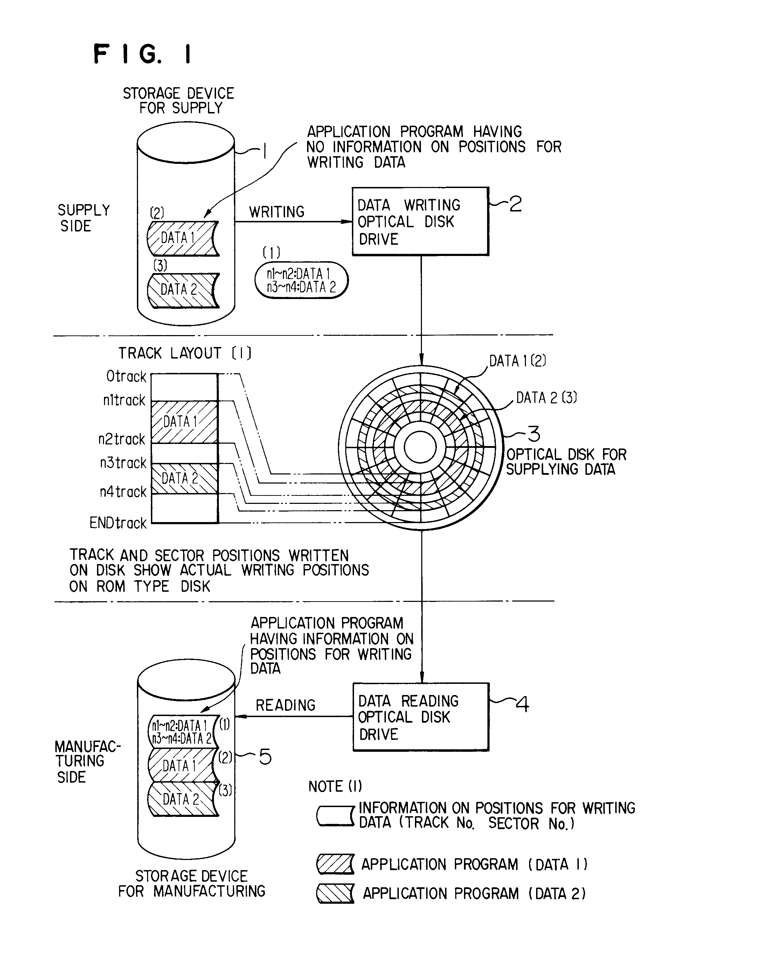

Fig. 1 is a diagram showing a flow of data supply for manufacturing a ROM optical disk according to the present invention.

### DESCRIPTION OF PREFERRED EMBODIMENT

An embodiment of the present invention is shown in Fig. 1.

Application program data [2] and [3] to be written into a ROM type disk are stored in a storage device 1 consisting of a hard disk for supplying application program data. These application program data have no information on track arrangement in a disk.

Application program data are written in an optical disk for supplying data. An erasable type optical disk 3 for supplying data is set to a data writing optical disk drive 2 so as to be brought to a writable state. The application program data stored in the storage device 1 in this state are written in the optical disk 3 for supplying data in accordance with information [1] on the writing positions such as track and sector arrangement so as to show the same arrangement as that in a ROM type optical disk to be manufactured.

In the optical disk 3 for supplying data produced here, the track and sector arrangement and the like have the same layout as that of the produced ROM type optical disk, and the actual respective track and sector positions on the optical disk show the writing positions of the application program data. Further, the data at respective positions become the actual application program data that are written in the ROM type optical disk.

Next, the data that are written in the optical disk are read out of the optical disk 3 for supplying the data by a data reading optical disk drive 4. The reading positions (track and sector positions) of the data which are being read at this time are acquired by the drive. The application program data [2] and [3] read out by the drive to a storage device 5 for manufacturing a ROM type optical disk and the information [1] on positions for writing the data showing the track and sector arrangement at that time are stored in a storage device 5 for manufacturing a ROM type optical disk.

With this, it is possible to obtain an application program for writing in a ROM type disk in which the information [1] on positions for writing the data showing the track and sector arrangement is added to the application programs [2] and [3] for writing in a ROM type disk in a storage device for manufacturing.

According to a method of the present invention, it is possible to convert application program data having no information on positions for writing the data showing the track and sector arrangement and the like into application program data for writing in a ROM type optical disk added with information on positions for writing the data showing the track and sector arrangement and the like easily and promp- tlv.

## Claims

1. A method for manufacturing a ROM type optical disk in which application program data are written, comprising the steps of:
application program data ([2], [3]) having no information on positions for writing data stored in a storage device (1) are written in an optical disk (3) for supplying data by a data writing optical disk drive (2); and then
reading application program data ([2], [3]) and information ([1]) on positions for writing data out of an optical disk (3) for supplying data by a data reading optical disk drive (4) and stored in a storage device (5) for manufacturing a ROM type optical disk.

2. A method for manufacturing a ROM type optical disk according to Claim 1, wherein the storage devices (1, 5) are hard disks, optical disks or tape streamers. 3. A method for manufacturing a ROM type optical disk according to Claim 1, wherein the optical disk (3) for supplying data is a write-once type or erasable type optical disk.
